Europäisches Patentamt

European Patent Office

Office européen des brevets

(19)

(11) Veröffentlichungsnummer: **0 195 999**

**B1**

(12)

# EUROPÄISCHE PATENTSCHRIFT

(45) Veröffentlichungstag der Patentschrift:
07.06.89

(21) Anmeldenummer: 86103634.1

(22) Anmeldetag: 18.03.86

(51) Int. Cl.⁴: **F 16 K 11/074**

(54) **Mischventil.**

(30) Priorität: 26.03.85 DE 3510834
26.02.86 DE 3606097

(43) Veröffentlichungstag der Anmeldung:
01.10.86 Patentblatt 86/40

(45) Bekanntmachung des Hinweises auf die Patenterteilung: 07.06.89 Patentblatt 89/23

(84) Benannte Vertragsstaaten:
AT BE CH DE FR GB IT LI NL SE

(56) Entgegenhaltungen:
DE–A– 3 124 241
DE–A– 3 327 776

(73) Patentinhaber: FRIEDRICH GROHE ARMATURENFA-
BRIK GmbH & CO
Hauptstrasse 137
D-5870 Hemer 1 (DE)

(72) Erfinder: Humpert, Jürgen
Oberlinweg 18
D-5870 Hemer (DE)
Erfinder: Pawelzik, Manfred
Herringser Weg 5a
D-4770 Soest (DE)

**Beschreibung**

Die Erfindung betrifft ein Mischventil mit den im Oberbegriff des Anspruchs 1 angegebenen Merkmalen.

Ein derartiges Mischventil ist aus der DE-A-33 27 776 bekannt. Der Ringkörper wird hierbei von Befestigungsschrauben, mit denen das Ventilgehäuse an der Armatur befestigt wird, auf dem Ventilgehäuse fixiert. Durch diese Anordnung ist es erforderlich, den Ringkörper als relativ großvolumigen Formkörper auszubilden.

Ferner ist es aus der DE-A-31 24 241 bekannt, eine Abdeckkappe eines Mischventils an einem, die Schwenkbewegungen des Handhebels zur etwa senkrechten Mittelachse des Mischventils mit ausführenden Halsteillager in dem Ventilgehäuse zu befestigen.

Der Erfindung liegt die Aufgabe zugrunde, bei dem im Oberbegriff des Anspruchs 1 angegebenem Mischventil die Befestigung und die Ausbildung des Hebelkopfgehäuses zu verbessern, so daß mit einfachen Mitteln eine platzsparende und verschleißarme Halterung des Hebelkopfgehäuses erzielt wird, wobei es mit zur Aufgabe gehört, das Hebelkopfgehäuse als im wesentlichen geschlossene, den Übergang zum Körper der Armatur bewirkende Haube auszubilden.

Diese Aufgabe wird erfindungsgemäß durch die im kennzeichnenden Teil des Anspruchs 1 angegebenen Merkmale gelöst. Weitere Ausgestaltungen der Erfindung sind in den Ansprüchen 2 bis 6 angegeben.

Ausführungsbeispiele der Erfindung sind in der Zeichnung dargestellt und werden im folgenden näher beschrieben. Es zeigt

Figur 1 ein in einer Sanitärarmatur angeordnetes Mischventil in Seitenansicht, teilweise geschnitten ;

Figur 2 das Mischventil gemäß Figur 1 im Schnitt um 90° gedreht ;

Figur 3 eine im Mischventil gemäß Figur 1 angeordnete Hülse im Seitenschnitt ;

Figur 4 die Hülse gemäß Figur 3 in Draufsicht ;

Figur 5 ein weiteres in einer Sanitärarmatur angeordnetes Mischventil

Figur 6 das Mischventil gemäß Figur 5 in Rückansicht, teilweise geschnitten ;

Figur 7 eine im Mischventil gemäß Figur 5 angeordnete Hülse im Seitenschnitt ;

Figur 8 die Hülse gemäß Figur 7 in Druntersicht ;

Figur 9 die Hülse gemäß Figur 7 in Draufsicht.

Der Einfachheit halber sind bei den Ausführungsbeispielen in der Zeichnung gleiche oder entsprechende Elemente mit jeweils gleichen Bezugszeichen versehen.

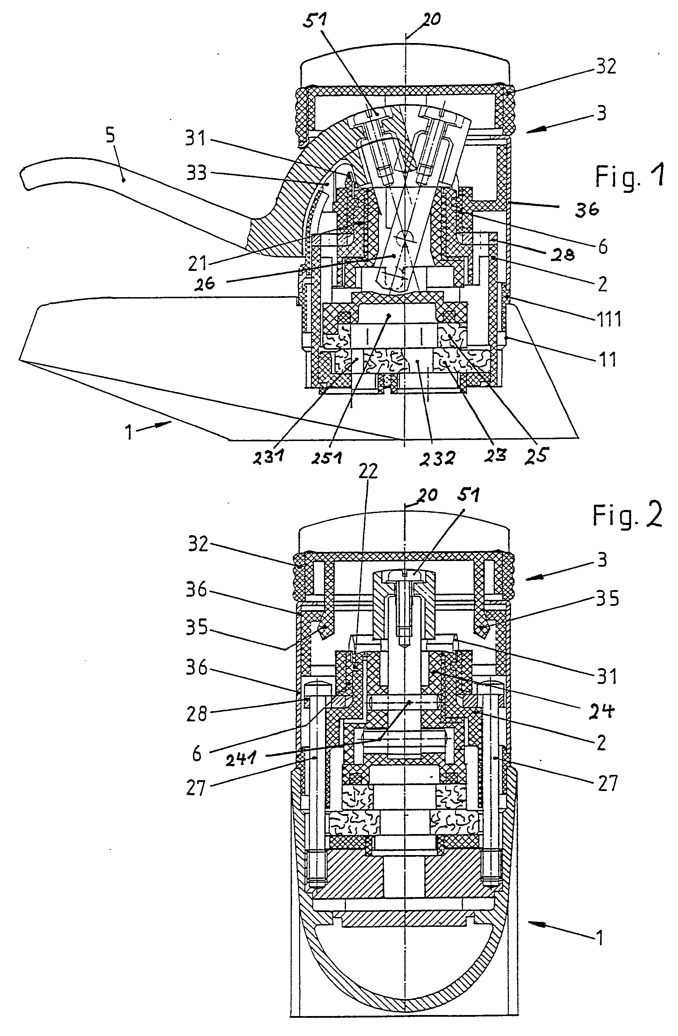

Bei dem Ausführungsbeispiel nach den Figuren 1 und 2 ist in einer teilweise dargestellten Armatur 1 in einer Aufnahmebohrung 11 ein in einem Ventilgehäuse 2 gekapselt angeordnetes Mischventil eingesetzt. Als Ventilelemente sind zwei aufeinanderliegende Ventilscheiben vorgesehen, wobei eine Ventilsitzscheibe 23 im Ventilgehäuse 2 ortsfest gehaltert und mit Durchtrittsöffnungen 231 für das aus der Armatur 1 zugeführte Kalt- und Warmwasser sowie einer Rückführungsöffnung 232 für das Mischwasser versehen ist. An der Ventilsitzscheibe 23 ist eine Steuerscheibe 25 verschiebbar angelagert und mit einem Überströmkanal 251 versehen. Die Steuerscheibe 25 wird dabei zur einen Hälfte von einer Keramikplatte gebildet und zur anderen Hälfte von einer Abdeck- und Führungsscheibe, welche beide formschlüssig und gedichtet miteinander verbunden sind. Beide aneinanderliegende Scheibenbereiche der Ventilsitzscheibe 23 und der Steuerscheibe 25 sind aus einem verschleißfesten Keramikmaterial hergestellt und liegen mit ihren durch entsprechende Feinstbearbeitung geglätteten Stirnflächen wasserdicht aneinander. An der von der Ventilsitzscheibe 23 abgekehrten Stirnseite der Steuerscheibe 25 ist ein Stellhebel 26 angelenkt. Der Stellhebel 26 ist dabei in einer im Ventilgehäuse 2 axial festliegend aber drehbar gehaltenen Buchse 24 um eine Schwenkachse 241 verschwenkbar gelagert. Der Überströmkanal 251 in der Steuerscheibe 25 sowie die Durchtrittsöffnungen 231 und die Rückführungsöffnung 232 in der Ventilsitzscheibe 23 sind so angeordnet und bemessen, daß durch eine Drehbewegung um die Mittelachse 20 das Mischungsverhältnis von Kalt- und Warmwasser und durch eine Schwenkbewegung um die Schwenkachse 241 die Gesamtdurchflußmenge eingestellt werden kann.

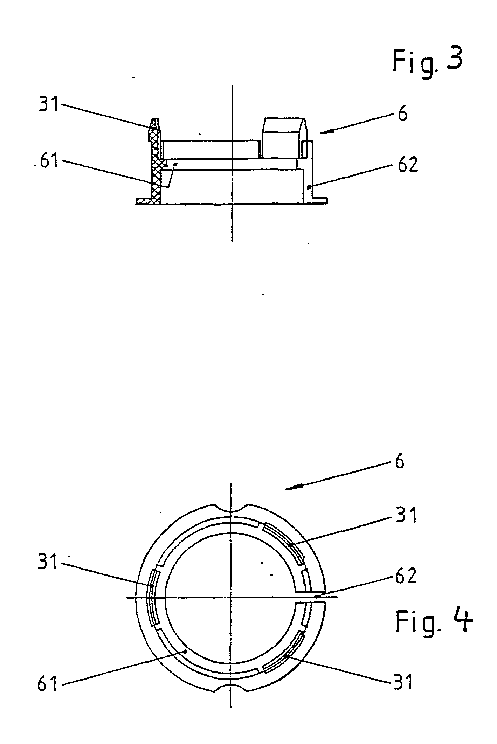

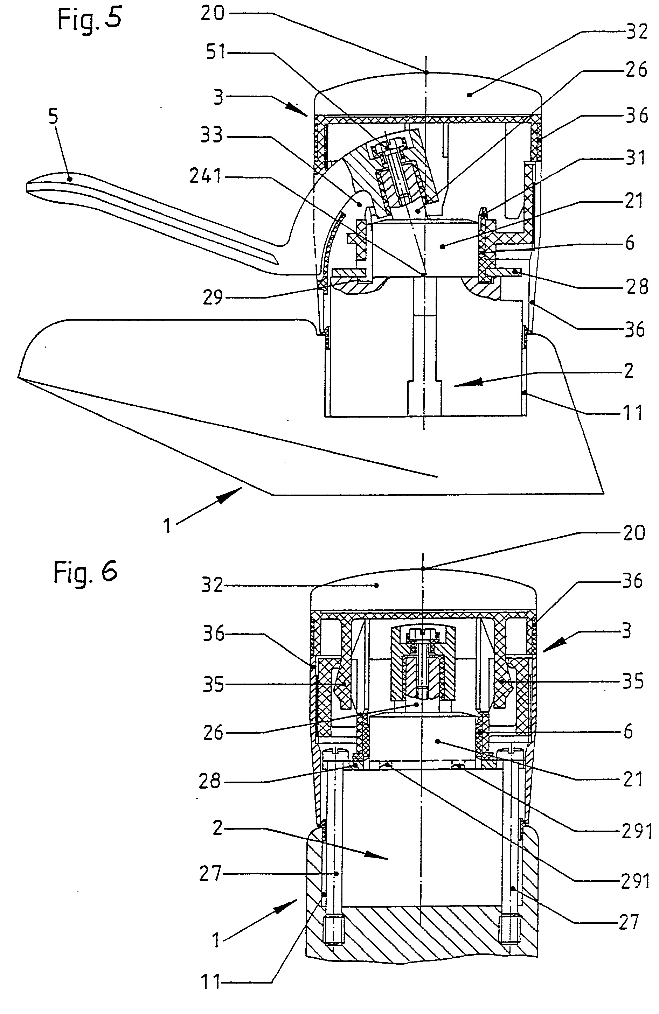

Im Bereich der Buchse 24 ist das Ventilgehäuse 2 mit einem Ansatz 21 versehen, an dem an der Außenseite eine umlaufende Ringnut 22 ausgebildet ist. Das Ventilgehäuse 2 ist außerdem mit Befestigungsschrauben 27 über eine Haltescheibe 25 fest mit der Armatur 1 verbunden. Auf dem Ansatz 21 ist ein Hebelkopfgehäuse 3 gelagert, wobei zwischen dem Ansatz 21 und dem Hebelkopfgehäuse 3 eine Hülse 6 aus gut gleitfähigem, elastischem Kunststoff angeordnet ist. Die Hülse 6 weist, wie insbesondere aus den Figuren 3 und 4 ersichtlich, einen Längsschlitz 61 auf und wird vor der Montage des Hebelkopfgehäuses 3 auf den Ansatz 21 mit einer elastischen Aufspreizung aufgeschoben, wobei ein Innenbund 61 in die Ringnut 22 einfaßt und die Hülse 6 auf dem Ansatz 21 formschlüssig haltert. An der vorkragenden Stirnseite der Hülse 6 sind Schnappzungen 31 angeformt, die beim Aufstecken des Hebelkopfgehäuses 3 elastisch ausgelenkt werden und nach dem Erreichen der Stecklage in ihre Ausgangslage zurückfedern und das Hebelkopfgehäuse 3 in der Stecklage axial sichern. In der Seitenwandung des Hebelkopfgehäuses 3 ist ein Fenster 33 ausgebildet, durch den ein hebelförmiger Handgriff 5 mit einem Kreisbogen, dessen Mittelpunkt von der Schwenkachse 241 gebildet ist, hindurchgeführt ist. Der Handgriff 5 ist mit dem Stellhebel 26 durch eine Schraube 51 verbunden. Das Hebelkopfgehäuse 3 ist schließlich an der oberen Stirnseite mit einer Kappe 32 verschließbar.

Die Kappe 32 ist mit federnden Zungen 35 versehen, wobei die Zungen so ausgebildet sind, daß die Kappe 32 gegen das Hebelkopfgehäuse 3 gedrückt wird. Die Kappe 32 liegt hierbei mit einem ringförmigen Teil an der Stirnseite einer Mantelhülse 36 an, die zur Abdeckung des aus Kunststoff hergestellten Hebelkopfgehäuses 3 aus Metall besteht, und schiebt diese in eine an der Armatur 1 ausgebildete Aufnahme 111, so daß ein glatter und dichter Übergang zwischen Hebelkopfgehäuse und Armatur 1 gewährleistet ist.

Der Einbau des Mischventils in eine Sanitärarmatur 1 kann in folgender Weise durchgeführt werden : Zunächst wird das Mischventil mit Hilfe der Befestigungsschrauben 27 und der Haltescheibe 28 in der Bohrung der Sanitärarmatur 1 befestigt. Danach kann die Hülse 6 an der Ringnut 22 befestigt werden. Anschließend kann das Hebelkopfgehäuse 3 mit den Schnappzungen 31 verrastet werden. Nunmehr wird der Haltegriff 5 mit der Schraube 51 an dem Stellhebel 26 befestigt und schließlich kann mit der Kappe 32 das Hebelkopfgehäuse 3 verschlossen werden, worauf die Armatur einsatzbereit ist.

Bei den vorbeschriebenen Ausführungsbeispielen ist das Hebelkopfgehäuse 3 nach der Montage auf dem Ventilgehäuse 2 formschlüssig gehalten. Ein Demontieren ist nur möglich, wenn zunächst die Kappe 32 von dem Hebelkopfgehäuse 3 gelöst worden ist und die einzelnen Schnappzungen 31 radial zurückgebogen werden. Die Reibkräfte, die durch die Betätigung der Armatur entstehen, werden durch das formschlüssig gehaltene Hebelkopfgehäuse 3 unschädlich aufgenommen. Ein unbeabsichtigtes Lösen des Hebelkopfgehäuses 3 von dem Ventilgehäuse ist somit sicher vermieden.

In den Figuren 5 bis 9 ist ein weiteres Ausführungsbeispiel der Erfindung dargestellt, bei dem eine umlaufende Ringnut 22 auf dem vorkragenden Ansatz 21 des Sondergehäuses nicht erforderlich ist. Die Herstellung dieser Ringnut 22 kann fertigungstechnisch problematisch sein. Das Ventilgehäuse 2 ist hierbei ebenfalls im Bereich der Schwenkachse 241 mit einem zylindrischen Ansatz 21 versehen. An der durch den Ansatz gebildeten äußeren, ringförmigen Stirnfläche ist eine Haltescheibe 28 angelagert, die mit Hilfe von Befestigungsschrauben 27 das Ventilgehäuse 2 in der Armatur 1 haltert. Auf dem Ansatz 21 ist mit Hilfe einer Hülse 6 ein Hebelkopfgehäuse 3 drehbar aber axial festliegend gehalten. In der Seitenwandung des Hebelkopfgehäuses 3 ist ein Fenster 33 ausgebildet, durch das ein hebelförmiger Handgriff 5 mit einem Kreisbogen hindurchgeführt ist, dessen Mittelpunkt von der Schwenkachse 241 gebildet ist. Das Hebelkopfgehäuse 3 ist außerdem an der oberen Stirnseite mit einer Kappe 32 verschlossen, wobei federnde Zungen 35 an der Kappe 32 derart ausgebildet sind, daß die Kappe 32 gegen ein ringförmiges Teil an der Stirnseite der Mantelhülse 36 des Hebelkopfgehäuses 3 gedrückt wird.

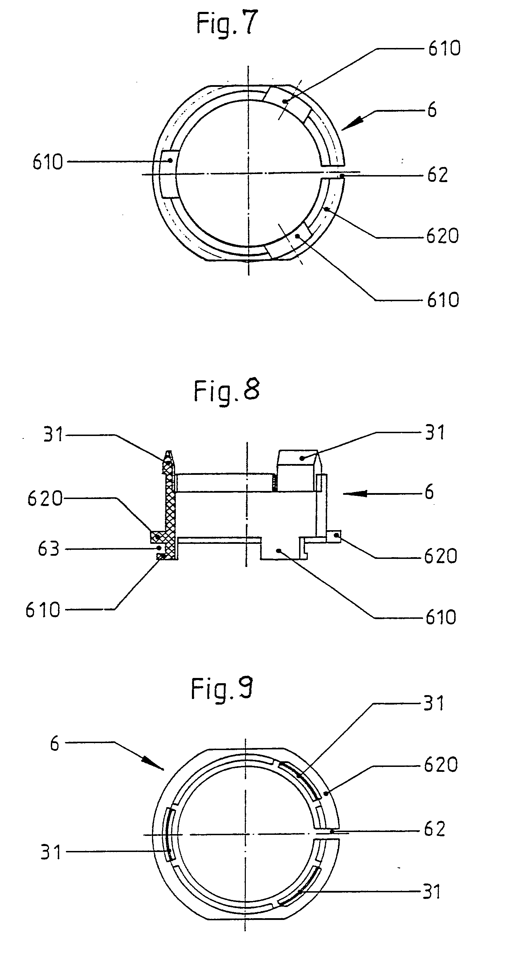

Die Verbindung zwischen Hebelkopfgehäuse 3 und dem Ventilgehäuse 2 wird über die Hülse 6 hergestellt. Die Hülse 6 weist, wie insbesondere den Figuren 7 und 8 zu entnehmen ist, an der dem Ventilgehäuse 2 zugekehrten Stirnseite drei Nasen 610 auf, die zusammen mit einem umlaufenden Flansch 620 eine radial nach außen offene Ringnut 63 bilden. An der Innenwandung der Haltescheibe 28 sind entsprechend den Abmessungen der Nasen 610 Aussparungen ausgebildet, so daß die Hülse 6 mit den Nasen 610 in die Hülse 6 soweit eingeschoben werden kann, bis der Flansch 620 an der Stirnfläche der Haltescheibe 28 anliegt. Die umlaufende Ringnut 63 ist dabei so bemessen, daß die Hülse 6 in der Stecklage relativ zur Haltescheibe 28 verdreht werden kann, so daß die Nasen 610 die Hülse 6 mit der Haltescheibe 28 axial festliegend verbinden. Nunmehr kann die Haltescheibe 28 zusammen mit der Hülse 6 auf dem Ventilgehäuse 2 in der vorgesehenen Drehstellung auf dem Ventilgehäuse 2 angeordnet und mit den Befestigungsschrauben 27 die gesamte Baueinheit an der Armatur 1 gehaltert werden. Damit eine glatte Anlage der Haltescheibe 28 an der Ringfläche des Ventilgehäuses 2 gewährleistet ist, sind in der Ringfläche des Ventilgehäuses 2 entsprechend den Abmessungen der Nasen 610 ausgebildete Ausnehmungen 29 vorgesehen, die außerdem verhindern, daß im zusammengebautem Zustand die Hülse 6 in die Einsteckdrehlage zurückgedreht werden kann. Ferner sind an der Ringfläche des Ventilgehäuses 2 axial vorstehende Zapfen 291 ausgebildet, die in entsprechende Aufnahmebohrungen der Haltescheibe 28 in der Einbaulage einfassen und gewährleisten, daß die Haltescheibe 28 nur in der vorgesehenen Drehstellung auf dem Sondergehäuse 2 an der Ringfläche zur Anlage gelangen kann. Aus Fertigungsgründen ist die Hülse 6 außerdem mit einem durchgehenden Längsschlitz 62 versehen.

Der Einbau des Mischventils in die Armatur 1 kann in folgender Weise erfolgen :

Zunächst wird die Hülse 6 mit ihren Nasen 610 bajonettartig mit der Haltescheibe 28 zusammengefügt. Nunmehr kann diese Baueinheit auf den Ansatz 21 des Ventilgehäuses 2 geschoben werden und zusammen mit den im Ventilgehäuse 2 angeordneten Ventilelementen mit den Befestigungsschrauben 27 in der Armatur 1 gehaltert werden. Auf diesen Bausatz kann dann das Hebelkopfgehäuse 3 auf die Hülse 6 aufgeschoben werden, wobei das Hebelkopfgehäuse 3 drehbar aber durch Schnappzungen 31 axial festliegend auf der Hülse 6 gehaltert wird. Nunmehr kann der Randgriff 5 durch das Fenster 33 in das Hebelkopfgehäuse 3 eingeführt und mit einer Schraube 51 an dem Stellhebel 26 befestigt werden. Hierauf kann mit der Kappe 32 das Hebelkopfgehäuse 3 stirnseitig verschlossen werden, wobei die federnden Zungen 35 die Kappe 32 in der Schließlage halten.

**Patentansprüche**

1. Mischventil, insbesondere für Kalt- und Warmwasser, bei dem mit einem Handgriff (5) das Mischungsverhältnis und die Gesamtdurchflußmenge einstellbar ist, wobei der mit dem Ventilglied verbundene, um zwei senkrecht zueinander im Ventilgehäuse (2) angeordnete Drehachsen verschwenkbare, hebelförmige Handgriff (5) aus einem um die erste Drehachse drehbar, mit einem Ringkörper auf einem vorkragenden Ansatz (21) des die Ventilglieder kapselnden Ventilgehäuses (2) befestigbaren Hebelkopfgehäuse (3) herausgeführt ist, dadurch gekennzeichnet, daß auf dem Ansatz (21) eine elastisch spreizbare Hülse (6) aus gut gleitfähigem Material angeordnet ist, an deren vorkragender Stirnseite Schnappzungen (31) angeformt sind, die nach dem Aufstecken das Hebelkopfgehäuse (3) in der Stecklage sichern.

2. Mischventil nach Anspruch 1, dadurch gekennzeichnet, daß die Hülse (6) mit einem in eine umlaufende Ringnut (22) des Ansatzes (21) einfassenden Innenbund (61) versehen ist.

3. Mischventil mit seitlich aus dem Mantel des Hebelkopfgehäuses herausgeführtem, hebelförmigem Handgriff, nach Anspruch 1 oder 2, dadurch gekennzeichnet, daß das Hebelkopfgehäuse (3) ein zur vorstehenden Stirnseite offenes Fenster (33) für den Durchtritt des Handgriffs (5) hat und die offene Fensterseite durch ein mittels Bajonettverschluß oder federnder Zungen (35) auf dem Hebelkopfgehäuse (3) befestigbaren Kappe (32) verschließbar ist.

4. Mischventil nach Anspruch 3, dadurch gekennzeichnet, daß die Zungen (35) so ausgebildet sind, daß die Kappe (32) axial gegen das Hebelkopfgehäuse (3) gedrückt wird und die Kappe (32) auf eine axial verschiebbar auf dem Hebelkopfgehäuse (3) gehaltene Mantelhülse (36) einwirkt, derart, daß die Mantelhülse (36) an einer Aufnahme (111) an der Armatur (1) anliegt.

5. Mischventil nach wenigstens einem der Ansprüche 1 bis 4, dadurch gekennzeichnet, daß die Hülse (6) an der dem Ventilgehäuse (2) zugekehrten Stirnseite wenigstens zwei, vorzugsweise drei, als Bajonettverschluß wirkende Nasen (610) hat, die in entsprechende Ausnehmungen (29) im Ventilgehäuse (2) einsenkbar sind, und eine an einer Ringfläche des Sondergehäuses (2) anliegenden Haltescheibe (25) mit parallel zur Mittelachse (20) angeordneten Befestigungsschrauben (27) zur Halterung. des Ventilgehäuses (2) in der Armatur (1) vorgesehen ist, an dessen Innenwandung entsprechend den Abmessungen der Nasen (610) Aussparungen ausgebildet sind, wobei die Nasen (610) eine entsprechend der Dicke der Haltescheibe (28) dimensionierte, radial nach außen offene umlaufende Ringnut (63) formen.

6. Mischventil nach Anspruch 5, dadurch gekennzeichnet, daß an der Ringfläche des Ventilgehäuses (2) wenigstens ein vorstehender Zapfen (291) ausgebildet ist, der in der Einbaulage in eine entsprechend gestaltete Aufnahmebohrung der Haltescheibe (28) einfaßt.

## Claims

1. A mixer valve, in particular for cold and hot water, in which the mixing ratio and the total volume of water flowing through are adjustable by means of a handle (5), wherein the lever-shaped handle (5) joined to the valve member and pivotable about two axes of rotation located in the valve housing (2) at right angles to one another is guided out of a lever head housing (3) that is rotatable about the first axis of rotation and can be fastened with an annular body on a projecting extension (21) of the valve housing (2) encapsulating the valve members, characterized in that on the extension (21) there is arranged a resiliently expandable sleeve (6) of material having good sliding properties, on the projecting end face of which there are moulded snap-action tongues (31) which, after being pushed on, secure the lever head housing (3) in its mounted position.

2. A mixer valve according to claim 1, characterized in that the sleeve (6) is provided with an internal collar (61) engaging in a circumferential annular groove (22) of the extension (21).

3. A mixer valve with a lever-shaped handle guided laterally out of the outer covering of the lever head housing, according to claim 1 or 2, characterized in that the lever head housing (3) has a window (33) open towards the projecting end face for the passage of the handle (5) and the open window side is closeable by a cap (32) which can be secured on the lever head housing (3) by means of a bayonet-type closure or resilient tongues (35).

4. A mixer valve according to claim 3, characterized in that the tongues (35) are so constructed that the cap (32) is pressed axially against the lever head housing (3) and the cap (32) acts on an axially displaceable outer sleeve (36) mounted on the lever head housing (3) in such a manner that the outer sleeve (36) lies on a location seat (111) on the fitting (1).

5. A mixer valve according to at least one of claims 1 to 4, characterized in that the sleeve (6), on the end face facing towards the valve housing (2), has two, preferably three, projections (610) acting as a bayonet-type closure which can be sunk into corresponding recesses (29) in the valve housing (2), and a retaining washer (28) lying adjacent to an annular face of the valve housing (2) with fastening screws (27) arranged parallel to the centre line (20) to fix the valve housing (2) in the fitting (1) is provided, on the inner wall of which valve housing there are formed recesses corresponding to the dimensions of the projections (610), wherein the projections (610) form a circumferential annular groove (63) open in the radially outward direction and dimensioned to correspond to the thickness of the retaining washer (28).

6. A mixer valve according to claim 5, characterized in that on the annular face of the valve housing (2) there is formed at least one projecting peg (291) which, in the mounted position, engages in a correspondingly shaped location bore of the retaining washer (28).

## Revendications

1. Robinet mélangeur, notamment pour eau froide et eau chaude, dans lequel le rapport de mélange et le débit total sont réglables par une poignée (5), et la poignée (5) en forme de levier relié à l'organe du robinet et pouvant pivoter autour de deux axes de rotation montés dans le corps de robinet (2) perpendiculairement l'un à l'autre, sort d'un corps de tête de levier (3), pivotant autour du premier axe de rotation et pouvant se fixer à un corps annulaire sur une allonge en saillie (21) du corps de robinet (2) enfermant les organes du robinet, caractérisé en ce qu'il est monté sur l'allonge (21) une douille expansible (6) d'un bon matériau de glissement, sur la face frontale en saillie de laquelle sont formés des cliquets (31) qui assurent après emboîtement le corps de tête de levier (3) dans sa position d'emboîtement.

2. Robinet mélangeur suivant la revendication 1, caractérisé en ce que la douille (6) est pourvue d'une collerette intérieure (61) pénétrant dans une gorge annulaire (22) de l'allonge (21).

3. Robinet mélangeur avec une poignée en forme de levier sortant latéralement de l'enveloppe du corps de tête de levier, suivant la revendication 1 ou 2 caractérisé en ce que le corps de tête de levier (3) possède une fenêtre (33) ouverte sur la face frontale en saillie, pour la traversée du levier (5) et que cette fenêtre ouverte peut être fermée par un capot (32) qui se fixe sur le corps de tête de levier (3) au moyen d'un emboîtement à baïonnette ou de languettes élastiques (35).

4. Robinet mélangeur suivant la revendication 3, caractérisé en ce que les languettes (35) ont une configuration telle que le capot (32) est pressé axialement contre le corps de tête de levier (3) et que le capot (32) agit sur une chemise (36) emmanchée axialement sur le corps de tête de levier (3), en sorte que la chemise (36) vienne en butée sur un logement (111) de l'armature (1).

5. Robinet mélangeur suivant au moins l'une des revendications 1 à 4, caractérisé en ce que la douille (6) possède sur la face frontale tournée vers le corps de robinet (2) au moins deux et de préférence trois becs (610) agissant comme un emboîtement en baïonnette qui plongent dans des échancrures (29) correspondantes dans le corps de robinet (2) et dans lequel est prévue une rondelle d'arrêt (28) en appui sur une surface annulaire du corps spécial (2), avec des vis de fixation (27) montées parallèlement à l'axe central (20) pour la fixation du corps de robinet (2) dans l'armature (1), sur la paroi intérieure de laquelle des échancrures sont réalisées en correspondance avec les dimensions des bras (610), les bras (610) formant une forge annulaire dimensionnée en fonction de l'épaisseur de la rondelle d'arrêt (28) et ouverte radialement vers l'extérieur.

6. Robinet mélangeur suivant la revendication 5, caractérisé en ce que sur la surface annulaire du corps de robinet (2) il est réalisé au moins un ergot en saillie (291) qui pénètre dans la position de montage dans un perçage de la rondelle d'arrêt (28) ayant la forme appropriée pour le recevoir.

Fig. 1

Fig. 2

Fig. 3

31

6

61

62

6

31

31

62

Fig. 4

61

31

EP 0 195 999 B1

Fig. 5

Fig. 6

## Fig.7

## Fig.8

## Fig.9